# EUROPÄISCHE PATENTANMELDUNG

(11) **EP 2 682 417 A1**
(43) Veröffentlichungstag der Anmeldung: **08.01.2014**
(21) Anmeldenummer: 12175420.4
(22) Anmeldetag: 06.07.2012
(51) Int. Cl.: C08G 69/46

(54) **Verfahren zur Reinigung von Polyamidteilchen**

(71) Anmelder: BASF SE, 67056 Ludwigshafen (DE)
(72) Erfinder: Die Erfindernennung liegt noch nicht vor
(74) Vertreter: Reitstötter - Kinzebach

(57) **Zusammenfassung**

Die vorliegende Erfindung betrifft ein Verfahren zur Reinigung von Polyamidteilchen, bei dem man diese mit einem lactamhaltigen Behandlungsmedium und gegebenenfalls mit einem gasförmigen Behandlungsmedium in Kontakt bringt.

## Beschreibung

### HINTERGRUND DER ERFINDUNG

Die vorliegende Erfindung betrifft ein Verfahren zur Reinigung von Polyamidteilchen, bei dem man diese mit einem lactamhaltigen Behandlungsmedium und gegebenenfalls mit einem gasförmigen Behandlungsmedium in Kontakt bringt.

### STAND DER TECHNIK

Polyamide gehören zu den weltweit in großem Umfang hergestellten Polymeren und dienen neben den Hauptanwendungsbereichen Fasern, Werkstoffe und Folien einer Vielzahl weiterer Verwendungszwecke. Unter den Polyamiden ist das Polyamid 6 mit einem Anteil von etwa 57 % das am meisten hergestellte Polymer. Das klassische Verfahren zur Herstellung von Polyamid 6 (Polycaprolactam) ist die hydrolytische Polymerisation von ε-Caprolactam, die immer noch von großer technischer Bedeutung ist. Sie wird z. B. im Kunststoff Handbuch, ¾ Technische Thermoplaste: Polyamide, Carl Hanser Verlag, 1998, München, S. 42 - 47 und 65 - 70, beschrieben. Die hydrolytische Polymerisation führt zur Einstellung eines Gleichgewichts aus Polyamid 6, oligomeren Komponenten, Monomeren und Wasser. Der Gehalt an Oligomeren und Monomeren kann z. B. 8 bis 15 Gew.-% betragen, so dass vor einer Weiterverarbeitung eine zumindest teilweise Entfernung erforderlich ist. Üblicherweise wird dies durch Extraktion mit Wasser bei erhöhter Temperatur bewerkstelligt. Hierbei fallen jedoch verdünnte wässrige Lösungen von Caprolactam an, deren Aufarbeitung technisch aufwendig ist. Dies gilt auch für Polyamide, die anstelle von oder zusätzlich zu Caprolactam aus polyamidbildenden Diaminen und Dicarbonsäuren aufgebaut sind. Ganz allgemein müssen aus solchen Polyamiden Monomere und Oligomere soweit entfernt werden, dass die für die weitere Verarbeitung erforderlichen Eigenschaften sichergestellt sind.

Aus der DD-A-206 999 ist ein Verfahren zur Reinigung von Polyamidteilchen bekannt, bei dem diese mit Wasser im Gegenstrom extrahiert werden. Nachteilig an diesem Verfahren ist zum einen der hohe Energieaufwand, der erforderlich ist, wenn das Wassers zur Trennung von den extrahierten Komponenten verdampft wird. Zudem neigen Polyamide insbesondere bei längerem Wasserkontakt bei erhöhter Temperatur zur Wasseraufnahme (Quellen), wodurch die Materialeigenschaften in unerwünschter Weise verändert werden können. Das so von den Polyamidteilchen aufgenommene Wasser muss durch Trocknung wieder entfernt werden, was ebenfalls mit einem hohen Energieaufwand verbunden ist.

Aus der EP-A-284 968 ist Verfahren zur Entfernung von Caprolactam und dessen Oligomeren aus Polyamidteilchen durch Behandeln mit Inertgasen bei erhöhter Temperatur bekannt. Nachteilig an der konkret gelehrten Behandlung mit überhitztem Wasserdampf ist der hohe Energieaufwand zur Erzeugung der benötigten großen Dampfmengen.

Es ist bekannt, dass Caprolactam bei der Extraktion von Polyamid 6 als Lösungsvermittler gegenüber den Oligomeren des Lactams wirkt. Dementsprechend werden vielfach wässrige Caprolactamlösungen zur Extraktion von Polyamid 6 eingesetzt.

Die WO 99/26996 und die WO 99/26998 beschreiben ein Verfahren zur kontinuierlichen Extraktion von Polyamiden, wobei Polyamidteilchen in einer senkrechten Extraktionskolonne mit im Kreislauf geführter, wässriger Caprolactamlösung behandelt werden.

Die JP-A-45 025 519 offenbart einen mehrstufigen Extraktionsprozess, wobei das Polyamidgranulat in der ersten Stufe mit einer 5 bis 50%igen wässrigen Caprolactamlösung und in der zweiten Stufe mit einer 0,1 bis 5%igen wässrigen Caprolactamlösung, jeweils bei 70 bis 120 °C, extrahiert wird.

Die JP- A-51 149 397 beschreibt die Extraktion mit einer wässrigen 60 gew.-%igen Caprolactamlösung bei 80 bis 120 °C für 3 bis 8 Stunden in der ersten Stufe und die Extraktion mit Caprolactam-freiem Wasser, das vorzugsweise O₂-frei ist oder geringe Mengen eines reduzierenden Agens enthält, in der letzten Stufe.

In der JP-A-53 071 196 wird Polyamid zunächst mit einem heißen, wässrigen Medium extrahiert und dann bei Temperaturen von 10 bis 50 °C unter dem Schmelzpunkt des Polyamids in einem Inertgasstrom behandelt, wobei das heiße, wässrige Medium z. B. Wasser von 80 bis 130 °C mit weniger als 50 Gew.-% ε-Caprolactam umfasst.

In der DE-A-195 05 150 werden die Oligomeren des Caprolactams durch Behandlung mit reinem Caprolactam als Extraktionsmittel bei 60 bis 150 °C aus einem Polyamidgranulat entfernt. Dieses Verfahren hat jedoch den Nachteil, dass anhaftendes Caprolactam bei den nachfolgenden Prozessschritten zum Verkleben des Granulats führen kann.

Die Extraktion von Polyamidteilchen mit Wasser, Wasserdampf und/oder Lactamhaltigen Extraktionsmitteln ist noch verbesserungswürdig. So ist entweder der Restextraktgehalt im Granulat zu hoch oder die wässrige Extraktlösung muss zur Rückführung des Lactams und seiner Oligomeren in die Polymerisation stark aufkonzentriert werden, wozu erhebliche Energiemengen erforderlich sind. Insbesondere fehlt es immer noch an einer Möglichkeit zur Integration von hydrolytischer Polymerisation und Reinigung der so erhaltenen Polyamidteilchen, wobei die bei der Reinigung anfallenden Fraktionen, die Lactam, Polyamidoligomere und Wasser enthalten, möglichst ohne weitere Aufarbeitung wieder in die Polymerisation zurückgeführt werden können. Dabei soll insbesondere auf eine Wasserabtrennung weitestgehend verzichtet werden können.

Der vorliegenden Erfindung liegt die Aufgabe zugrunde, ein einfaches und effektives Verfahren zur Reinigung von Polyamidteilchen zur Verfügung zu stellen. Dieses soll vorzugsweise die Entfernung von Monomeren und Oligomeren ermöglichen, wobei Polyamidteilchen mit einem sehr niedrigen Restextraktgehalt erhalten werden. Speziell soll das Verfahren energiegünstig durchführbar sein. Des Weiteren soll eine Integration von hydrolytischer Polymerisation und Reinigung der dabei erhaltenen rohen Polymerteilchen ermöglicht werden. Im Idealfall soll dabei die bei der Reinigung anfallende Wassermenge die zum Starten der hydrolytischen Polymerisation erforderliche Wassermenge nicht überschreiten. Ebenfalls im Idealfall soll die bei der Reinigung anfallende Menge an Monomeren und Oligomeren die zur hydrolytischen Polymerisation eingesetzte Menge an Monomeren und Oligomeren nicht überschreiten.

Demgemäß wurde ein neues und verbessertes Verfahren zur Reinigung von Polyamidteilchen gefunden, bei dem man diese einer Behandlung mit wenigstens einem Lactam und bevorzugt zusätzlich mit wenigstens einem gasförmigen Behandlungsmedium unterzieht.

### ZUSAMMENFASSUNG DER ERFINDUNG

Gegenstand der Erfindung ist ein Verfahren zur Herstellung von Polyamidteilchen, bei dem man
a) rohe Polyamidteilchen bereitstellt,
b) die in Schritt a) bereitgestellten rohen Polyamidteilchen in einer Behandlungszone mit einem ersten flüssigen Behandlungsmedium (B1) in Kontakt bringt, das wenigstens ein Lactam enthält, und das beladene Behandlungsmedium (B1) abtrennt,
c) gegebenenfalls die rohen Polyamidteilchen zusätzlich mit einem zweiten gasförmigen Behandlungsmedium (B2) in Kontakt bringt.

### AUSFÜHRUNGSFORMEN DER ERFINDUNG

Im Einzelnen umfasst die Erfindung die folgenden bevorzugten Ausführungsformen:
1. Verfahren zur Herstellung von Polyamidteilchen, bei dem man
   a) rohe Polyamidteilchen bereitstellt,
   b) die in Schritt a) bereitgestellten rohen Polyamidteilchen in einer Behandlungszone mit einem ersten flüssigen Behandlungsmedium (B1) in Kontakt bringt, das wenigstens ein Lactam enthält, und das beladene Behandlungsmedium (B1) abtrennt,
   c) bevorzugt die rohen Polyamidteilchen zusätzlich mit einem zweiten gasförmigen Behandlungsmedium (B2) in Kontakt bringt.
2. Verfahren nach einer der vorhergehenden Ausführungsformen, wobei die Behandlung mit dem zweiten Behandlungsmedium (B2) gleichzeitig zur Behandlung mit dem ersten Behandlungsmedium (B1) oder teilweise oder vollständig nach der Behandlung mit dem ersten Behandiungsmedium (B1) erfolgt.
3. Verfahren nach einer der vorhergehenden Ausführungsformen, wobei in Schritt a) rohe Polyamidteilchen aus einer hydrolytischen Polymerisation wenigstens eines Lactams bereitgestellt werden.
4. Verfahren nach einer der vorhergehenden Ausführungsformen, wobei in Schritt a) rohe Polyamidteilchen bereitgestellt werden, die ε-Caprolactam einpolymerisiert enthalten.
5. Verfahren nach einer der vorhergehenden Ausführungsformen, wobei in Schritt a) rohe Polyamidteilchen bereitgestellt werden, die monomere und/oder oligomere Komponenten aus der Polyamidherstellung enthalten.
6. Verfahren nach einer der vorhergehenden Ausführungsformen, wobei das erste Behandlungsmedium (B1) ausschließlich aus wenigstens einem Lactam besteht oder wobei das erste Behandlungsmedium (B1) wenigstens ein Lactam und Wasser enthält.
7. Verfahren nach einer der vorhergehenden Ausführungsformen, wobei das zweite Behandlungsmedium (B2) ausgewählt ist unter Wasserdampf, Stickstoff, Helium, Neon, Argon, CO₂ und Mischungen davon.
8. Verfahren nach einer der vorhergehenden Ausführungsformen, wobei als zweites Behandlungsmedium (B2) Stickstoff eingesetzt wird.
9. Verfahren nach einer der vorhergehenden Ausführungsformen, bei dem man zur Bereitstellung der rohen Polyamidteilchen in Schritt a)
   a1) ein Monomergemisch bereitstellt, das wenigstens ein Lactam und/oder ein Oligomer davon enthält,
   a2) das in Schritt a1) bereitgestellte Monomergemisch in einer hydrolytischen Polymerisation in Gegenwart von Wasser unter Erhalt eines Reaktionsgemischs umsetzt, das Polyamid, Wasser, nicht umgesetzte Monomere und Oligomere enthält, und
   a3) aus dem in Schritt a2) erhaltenen Reaktionsgemisch rohe Polyamidteilchen formt.
10. Verfahren nach einer der vorhergehenden Ausführungsformen, wobei in Schritt b) die rohen Polyamidteilchen im Gegenstrom mit dem ersten flüssigen Behandlungsmedium (B1) durch die Behandlungszone geführt werden.
11. Verfahren nach einer der vorhergehenden Ausführungsformen, wobei die in Schritt b) eingesetzte Behandlungszone im Wesentlichen senkrecht angeordnet ist und die rohen Polyamidteilchen im Gegenstrom mit dem ersten flüssigen Behandlungsmedium (B1) und der Schwerkraft folgend nach unten durch die Behandlungszone geführt werden und das flüssige Behandlungsmedium (B1) entgegen der Schwerkraft nach oben geführt wird.
12. Verfahren nach einer der vorhergehenden Ausführungsformen, wobei das Behandlungsmedium (B1) zumindest teilweise oder ausschließlich im Bereich des Endes der Behandlungszone eingespeist wird, an dem die Polyamidteilchen ausgetragen werden.
13. Verfahren nach einer der vorhergehenden Ausführungsformen, wobei ein Teilstrom des Behandlungsmediums (B1) im Bereich des Endes der Behandlungszone eingespeist wird, an dem die Polyamidteilchen ausgetragen werden und ein weiterer Teilstrom des Behandlungsmediums (B1) der Behandlungszone über eine oder mehrere Einspeisungsstellen zugeführt wird, die stromaufwärts der Einspeisungsstelle des ersten Teilstroms angeordnet ist/sind.
14. Verfahren nach Ausführungsform 13, wobei der Lactamgehalt des Teilstroms des Behandlungsmediums (B1), der im Bereich des Endes der Behandlungszone eingespeist wird, an dem die Polyamidteilchen ausgetragen werden, höher ist als der Lactamgehalt des Teilstroms des Behandlungsmediums (B1), der der Behandlungszone über eine oder mehrere stromaufwärts der Einspeisungsstelle des ersten Teilstroms angeordnete Einspeisungsstellen zugeführt wird.
15. Verfahren nach einem der Ausführungsformen 12 bis 14, wobei in die Behandlungszone im Bereich des Endes, an dem die Polyamidteilchen ausgetragen werden, ausschließlich wenigstens ein Lactam, vorzugsweise ausschließlich s-Caprolactam, als Behandlungsmedium (B1) eingespeist wird.
16. Verfahren nach einer der Ausführungsformen 13 bis 15, wobei in die Behandlungszone über eine oder mehrere Einspeisungsstellen, die stromaufwärts der Einspeisungsstelle des ersten Teilstroms angeordnet ist/sind als zweiter Teilstrom des Behandlungsmediums (B1) ein Wasser/Lactam-Gemisch oder reines Wasser eingespeist wird.
17. Verfahren nach einer der vorhergehenden Ausführungsformen, wobei das Inkontaktbringen des Behandlungsmediums (B1) mit den rohen Polyamidteilchen in Schritt b) kontinuierlich erfolgt, wobei das Gewichtsverhältnis von abgetrenntem beladenen Behandlungsmedium (B1) pro Zeiteinheit zu aus der Behandlungszone ausgetragenen Polyamidteilchen pro Zeiteinheit vorzugsweise in einem Bereich von 0,01 : 1 bis 1 : 1, besonders bevorzugt 0,05 : 1 bis 0,5 : 1, insbesondere 0,1 : 1 bis 0,35 : 1, liegt.
18. Verfahren nach einer der vorhergehenden Ausführungsformen, wobei das Behandlungsmedium (B1) oder ein oder mehr als ein Teilstrom des Behandlungsmediums (B1) im Kreislauf geführt wird.
19. Verfahren nach einer der vorhergehenden Ausführungsformen, wobei die in Schritt b) eingesetzte Behandlungszone im Bereich des Eintrags der rohen Polyamidteilchen eine höhere Temperatur aufweist als im Bereich des Austrags der Polyamidteilchen.
20. Verfahren nach Ausführungsform 19, wobei die Temperaturdifferenz zwischen dem Bereich des Eintrags der rohen Polyamidteilchen und dem Bereich des Austrags der Polyamidteilchen wenigstens 5 °C, besonders bevorzugt wenigstens 10 °C, insbesondere wenigstens 20 °C, speziell wenigstens 40 °C, beträgt.
21. Verfahren nach einer der vorhergehenden Ausführungsformen, wobei das in Schritt b) abgetrennte beladene Behandlungsmediums (B1) in eine Polymerisation zur Bereitstellung der rohen Polyamidteilchen in Schritt a) zurückgeführt wird.
22. Verfahren nach einer der Ausführungsformen 3 bis 21, wobei in Schritt a) rohe Polyamidteilchen aus einer hydrolytischen Polymerisation wenigstens eines Lactams bereitgestellt werden und die in Schritt b) in Form des beladenen Behandlungsmediums B1) anfallende Wassermenge nicht die zum Starten der hydrolytischen Polymerisation in Schritt a) erforderliche Wassermenge überschreitet.
23. Verfahren nach einer der Ausführungsformen 3 bis 22, wobei in Schritt a) rohe Polyamidteilchen aus einer hydrolytischen Polymerisation wenigstens eines Lactams bereitgestellt werden und die in Schritt b) in Form des beladenen Behandlungsmediums B1) anfallende Menge an Monomeren und Oligomeren nicht die zur hydrolytischen Polymerisation in Schritt a) eingesetzte Menge an Monomeren und Oligomeren überschreitet.
24. Verfahren nach einer der Ausführungsformen 2 bis 23, bei dem man das beladene Behandlungsmedium (B2) einer Abtrennung wenigstens eines Teils der darin gelösten Komponenten durch Kondensation unterzieht.
25. Verfahren nach Ausführungsform 24, wobei die aus dem beladenen Behandlungsmediums (B1) kondensierten Komponenten zumindest teilweise in eine Polymerisation zur Bereitstellung der rohen Polyamidteilchen in Schritt a) zurückgeführt werden.
26. Verfahren nach einer der Ausführungsformen 3 bis 25, wobei in Schritt a) rohe Polyamidteilchen aus einer hydrolytischen Polymerisation wenigstens eines Lactams bereitgestellt werden und die in Schritt b) und c) in Form der beladenen Behandlungsmedien B1) und B2) anfallende Wassermenge nicht die zum Starten der hydrolytischen Polymerisation in Schritt a) erforderliche Wassermenge überschreitet.
27. Verfahren nach einer der Ausführungsformen 3 bis 26, wobei in Schritt a) rohe Polyamidteilchen aus einer hydrolytischen Polymerisation wenigstens eines Lactams bereitgestellt werden und die in Schritt b) und c) in Form der beladenen Behandlungsmedien B1) und B2) anfallende Menge an Monomeren und Oligomeren nicht die zur hydrolytischen Polymerisation in Schritt a) eingesetzte Menge an Monomeren und Oligomeren überschreitet.
28. Verfahren nach einer der vorhergehenden Ausführungsformen, wobei die Polyamidteilchen nach der Behandlung mit dem ersten flüssigen Behandlungsmedium (B1) und gegebenenfalls mit dem zweiten gasförmigen Behandlungsmedium (B2) einer Nachbehandlung (= Schritt d) unterzogen werden, vorzugsweise einer Trocknung und/oder Nachpolymerisation.
29. Verwendung von gereinigten Polyamidteilchen, erhältlich durch ein Verfahren, wie in einer der Ausführungsformen 1 bis 28 definiert, zur Herstellung von Granulaten, Folien, Fasern oder Formkörpern.

### BESCHREIBUNG DER ERFINDUNG

Das erfindungsgemäße Verfahren weist die folgenden Vorteile auf:
- Das erfindungsgemäße Reinigungsverfahren ist einfach und effektiv.
- Das Verfahren ermöglicht eine deutliche Verringerung des Gehalts der Polyamidteilchen an monomeren und oligomeren Komponenten.
- Das erfindungsgemäße Verfahren ermöglicht insbesondere eine deutliche Verringerung des Gehalts der Polyamidteilchen an cyclischem Dimer.
- Die erhaltenen Polyamidteilchen weisen in der Regel eine gegenüber den rohen Polyamidteilchen deutlich erhöhte Viskositätszahl auf.
- Das erfindungsgemäße Verfahren ermöglicht gegenüber konventionellen Reinigungsverfahren eine deutliche Energieeinsparung. So lässt sich gegenüber der konventionellen Extraktion mit Wasser in der Flüssigphase die erforderliche Wassermenge deutlich verringern. Damit verringert sich gleichzeitig die Energie, die erforderlich ist, das extrahierte Lactam aufzukonzentrieren und das gereinigte Polyamid zu trocknen. Auch gegenüber der konventionellen Extraktion mit Wasser in der Gasphase lässt sich die erforderliche Wassermenge und somit die erforderliche Energie zur Dampferzeugung deutlich verringern.
- Die erhaltenen Polyamidteilchen sind so rein, dass ein Einsatz zur Herstellung diverser Produkte ohne störende Auswirkungen möglich ist.
- Es lässt sich ein integriertes Verfahrenskonzept von Herstellung und Reinigung der Polyamidteilchen verwirklichen.

Im Rahmen der vorliegenden Erfindung wird unter einer monomeren Komponente eine niedermolekulare Verbindung verstanden, wie sie bei der Herstellung der rohen Polyamidteilchen zur Einführung einer einzelnen Wiederholungseinheit eingesetzt wird. Dazu zählen die bei der Herstellung der rohen Polyamidteilchen eingesetzten Verbindungen, wie Lactame, Dicarbonsäuren und deren Derivate, Diamine, Aminosäuren und deren Derivate, wie Aminocarbonitrile, Aminocarboxamide, Aminocarboxylatester, Aminocarboxylatsalze, etc.

Im Rahmen der vorliegenden Erfindung wird unter einer oligomeren Komponente eine Verbindung verstanden, wie sie bei der Herstellung der rohen Polyamidteilchen durch Reaktion von wenigstens zwei der die einzelnen Wiederholungseinheiten bildenden Verbindungen gebildet werden. Dabei weisen die oligomeren Komponenten ein geringeres Molekulargewicht auf als die in den Polyamidteilchen enthaltenen Polyamide. Zu den oligomeren Komponenten zählen cyclische und lineare Oligomere, speziell cyclisches Dimer, lineares Dimer, Trimer, Tetramer, Pentamer, Hexamer und Heptamer. Gängige Verfahren zur Bestimmung der oligomeren Komponenten von Polyamidteilchen erfassen im Allgemeinen die Komponenten bis zum Heptamer. Das erfindungsgemäße Verfahren ermöglicht insbesondere eine deutliche Verringerung des Gehalts der Polyamidteilchen an cyclischem Dimer.

Die Viskositätszahl (Staudinger-Funktion, bezeichnet mit VZ, VN oder J) ist definiert als VZ = 1 / c x (η - ηₛ) / ηₛ. Die Viskositätszahl steht in direkter Beziehung zur mittleren molaren Masse des Polyamids und gibt Auskunft über die Verarbeitbarkeit eines Kunststoffes. Die Bestimmung der Viskositätszahl kann nach DIN 51562, Teil 1 mit einem Ubbelohde-Viskosimeter erfolgen.

### Schritt a) Bereitstellung roher Polyamidteilchen

Die rohen Polyamidteilchen weisen in der Regel einen Gehalt an oligomeren Komponenten im Bereich von 0,3 bis 20 Gew.-%, bevorzugt 0,35 bis 15 Gew.-%, besonders bevorzugt 0,4 bis 5 Gew.-%, bezogen auf das Gesamtgewicht der Polyamidteilchen, auf.

Die rohen Polyamidteilchen weisen in der Regel einen Gehalt an monomeren Komponenten von kleiner oder gleich 15 Gew.-% auf. Bevorzugt liegt der Gehalt an monomeren Komponenten in einem Bereich von 0,001 bis 15 Gew.-%, besonders bevorzugt von 0,1 bis 12 Gew.-%, insbesondere von 0,8 bis 10 Gew.-%, bezogen auf das Gesamtgewicht der Polyamidteilchen.

Als rohe Polyamidteilchen eignen sich im erfindungsgemäßen Verfahren Teilchen in beliebiger Form, beispielsweise in Form von Granulaten, Pellets, Körner, Kugeln, Plättchen.

Die Größe der rohen Polyamidteilchen kann in weiten Bereichen variiert werden. Bevorzugt weisen die rohen Polyamidteilchen einen mittleren Durchmesser von 0,1 bis 10 mm, besonders bevorzugt 0,2 bis 5 mm, insbesondere 1 bis 4 mm, auf.

Die in dem erfindungsgemäßen Verfahren eingesetzten rohen Polyamidteilchen können im Algemeinen beliebige Polyamide enthalten. Die im erfindungsgemäßen Verfahren eingesetzten rohen Polyamidteilchen können durch an sich bekannte Verfahren hergestellt werden. Solche sind beispielsweise in der EP-B-1 235 671, EP-B-732 351, EP-A-348 821, EP-A-702 047 und EP-A-284 968 beschrieben.

Im Rahmen der vorliegenden Erfindung umfasst der Begriff Polyamide Homopolymere, Copolymere, Polymerblends und Pfropfcopolymere, die in der Hauptkette oder einer Seitenkette des Polymers von wenigstens einem Lactam abgeleitete Wiederholungseinheiten als eine wesentliche Komponente aufweisen.

Beispiele für Polyamidhomopolymere sind Nylon-6 (PA 6, Polycaprolactam), Nylon-7 (PA 7, Polyenantholactam oder Polyheptanamid), Nylon-10 (PA 10, Polydecanamid), Nylon-11 (PA 11, Polyundecanlactam) und Nylon-12 (PA 12, Polydodecanlactam).

Polyamidcopolymere können die Polyamidbausteine in verschiedenen Verhältnissen enthalten. Beispiele für Polyamidcopolymere sind Nylon 6/66 und Nylon 66/6 (PA 6/66, PA 66/6, d. h. Copolyamide aus PA 6 und PA 66 Bausteinen, hergestellt aus Caprolactam, Hexamethylendiamin und Adipinsäure).

Der Begriff Polyamide umfasst auch teilweise aromatische Polyamide. Teilweise aromatische Polyamide leiten sich in der Regel von aromatischen Dicarbonsäuren, wie Terephthalsäure oder Isophthalsäure, und einem linearen oder verzweigten aliphatischen Amin ab. Bevorzugt ist PA 6T/6.

Die in dem erfindungsgemäßen Verfahren eingesetzten rohen Polyamidteilchen enthalten bevorzugt Polyamide, die ausgewählt sind unter Polyamid-6, Polyamid-11, Polyamid-12, Polyamid-7, Polyamid-8, Polyamid-9, Polyamid-10 und deren Copolyamiden und Polymerblends davon. Besonders bevorzugt sind Polyamid-6 und Polyamid-12, insbesondere bevorzugt ist Polyamid-6.

Bevorzugt werden im erfindungsgemäßen Verfahren Polymerteilchen aus einer hydrolytischen Polymerisation wenigstens eines Lactams eingesetzt. Speziell werden im erfindungsgemäßen Verfahren Polyamid 6 Polymerteilchen aus einer hydrolytischen Polymerisation von ε-Caprolactam und/oder einem Oligomer davon bereitgestellt.

Eine spezielle Ausführungsform ist ein Verfahren, bei dem man zur Bereitstellung der rohen Polyamidteilchen in Schritt a)
a1) ein Monomergemisch bereitstellt, das wenigstens ein Lactam und/oder ein Oligomer davon enthält,
a2) das in Schritt a1) bereitgestellte Monomergemisch in einer hydrolytischen Polymerisation in Gegenwart von Wasser unter Erhalt eines Reaktionsgemischs umsetzt, das Polyamid, Wasser, nicht umgesetzte Monomere und Oligomere enthält, und
a3) aus dem in Schritt a2) erhaltenen Reaktionsgemisch rohe Polyamidteilchen formt.

Ein geeignetes Verfahren zur Herstellung von Polyamiden und speziell von Polyamid 6 durch hydrolytische Polymerisation wird z. B. im Kunststoff Handbuch, ¾ Technische Thermoplaste: Polyamide, Carl Hanser Verlag, 1998, München, S. 42 - 47 und 65 - 70, beschrieben. Auf diese Offenbarung wird hier in vollem Umfang Bezug genommen.

Das in Schritt a1) bereitgestellte Monomergemisch enthält vorzugsweise wenigstens ein C₅- bis C₁₂-Lactam und/oder ein Oligomer davon. Die Lactame sind insbesondere ausgewählt unter ε-Caprolactam, 2-Piperidon (δ-Valerolatam), 2-Pyrrolidon (γ-Butyrolactam), Capryllactam, Önanthlactam, Lauryllactam, Laurinlactam, deren Mischungen und Oligomeren davon. Besonders bevorzugt wird in Schritt a1) ein Monomergemisch bereitgestellt, das ε-Caprolactam und/oder ein Oligomer davon enthält.

In einer speziellen Ausführungsform werden im erfindungsgemäßen Verfahren Polymerteilchen aus der hydrolytischen Polymerisation von ε-Caprolactam eingesetzt.

Die Umsetzung des in Schritt a1) bereitgestellten Monomergemischs in einer hydrolytischen Polymerisation in Schritt a2) kann nach üblichen, dem Fachmann bekannten Verfahren erfolgen. Ein solches Verfahren wird z. B. im Kunststoff Handbuch, ¾ Technische Thermoplaste: Polyamide, Carl Hanser Verlag, 1998, München, S. 42 - 47 und 65 - 70, beschrieben. Auf diese Offenbarung wird hier in vollem Umfang Bezug genommen.

Bevorzugt wird in Schritt a2) zur hydrolytische Polymerisation ein Lactam einer Ringöffnung unter Einwirkung von Wasser unterzogen. Dabei wird z. B. das Lactam zumindest teilweise zur korrespondierenden Aminocarbonsäure gespalten, die dann im Folgeschritt durch Polyaddition und Polykondensation weiter polymerisiert. Wird nach einer bevorzugten Ausführungsform in Schritt a1) ein Monomergemisch bereitgestellt, das Caprolactam enthält, so wird dieses unter der Einwirkung von Wasser zumindest teilweise zur korrespondierenden Aminocapronsäure geöffnet und reagiert anschlie-βend unter Kondensation und Polyaddition zum Polyamid 6.

Die Umsetzung in Schritt a2) erfolgt vorzugsweise kontinuierlich.

Bevorzugt erfolgt die hydrolytische Polymerisation in Schritt a2) in Gegenwart von 0,1 bis 4 Gew.-% Wasser, besonders bevorzugt 0,2 bis 3,5 Gew.-% Wasser, bezogen auf Lactam. Bei dem Lactam handelt es sich speziell um Caprolactam.

Die hydrolytische Polymerisation in Schritt a2) kann in Gegenwart wenigstens eines Reglers, wie Essigsäure, erfolgen.

Die Umsetzung in Schritt a2) kann einstufig oder mehrstufig erfolgen. In einer ersten Ausführungsform ist die Umsetzung in Schritt a2) einstufig ausgeführt. Dabei wird vorzugsweise das Lactam mit Wasser und gegebenenfalls Additiven in einem Reaktor zur Reaktion gebracht.

Geeignete Reaktoren sind die zur Herstellung von Polyamiden üblichen, dem Fachmann bekannten Reaktoren. Bevorzugt erfolgt die hydrolytische Polymerisation in Schritt a2) in einem Polymerisationsrohr oder einem Bündel von Polymerisationsrohren. Speziell wird für die hydrolytische Polymerisation in Schritt a2) wenigstens ein so genanntes VK-Rohr eingesetzt. Die Abkürzung "VK" steht dabei für ein vereinfachtes kontinuierliches Verfahren. Bei einer mehrstufigen Ausführung der Umsetzung in Schritt a2) erfolgt bevorzugt wenigstens eine der Stufen in einem VK-Rohr. Bei einer zweistufigen Ausführung der Umsetzung in Schritt a2) erfolgt bevorzugt die zweite Stufe in einem VK-Rohr.

Speziell Polyamid 6 wird in der Regel in einem mehrstufigen Verfahren, speziell einem zweistufigen Verfahren, hergestellt. Caprolactam, Wasser und gegebenenfalls wenigstens ein Additiv, wie beispielsweise ein Kettenregler, werden der ersten Stufe zugeführt und zu einem Präpolymer umgesetzt. Dieses Präpolymer kann unter Druck oder durch eine Schmelzeaustragspumpe direkt oder über einen Schmelzetrockner in die zweite Stufe überführt werden.

Flüchtige Komponenten, z. B. überschüssiges Wasser, können in üblicher Weise, z. B. über einen Dephlegmator, aus der Reaktion entfernt werden.

Die hydrolytische Polymerisation in Schritt a2) erfolgt bevorzugt bei einer Temperatur im Bereich von 240 bis 280 °C. Bei einer mehrstufigen Ausführung der hydrolytischen Polymerisation in Schritt a2) können die einzelnen Stufen bei der gleichen oder bei unterschiedlichen Temperaturen erfolgen. Bei Durchführung einer Polymerisationsstufe in einem Rohrreaktor, speziell einem VK-Rohr, kann der Reaktor über die gesamte Länge im Wesentlichen die gleiche Temperatur aufweisen. Möglich ist auch ein Temperaturgradient im Bereich wenigstens eines Teils des Rohrreaktors. Möglich ist auch die Durchführung der hydrolytischen Polymerisation in einem Rohrreaktor, der zwei oder mehr als zwei Reaktionszonen aufweist, die bei unterschiedlicher Temperatur und/oder bei unterschiedlichem Druck betrieben werden.

Wenn die hydrolytische Polymerisation in Schritt a2) einstufig erfolgt, so liegt der Druck im Polymerisationsreaktor bevorzugt in einem Bereich von etwa 0,5 bar bis zu 5 bar. Besonders bevorzugt wird die einstufige Polymerisation bei Umgebungsdruck durchgeführt.

In einer bevorzugten Ausführung wird die hydrolytische Polymerisation in Schritt a2) zweistufig durchgeführt. Bevorzugt liegt der Druck in der ersten Stufe in einem Bereich von etwa 1 bar bis zu 20 bar, besonders bevorzugt in einem Bereich von 2 bis 10 bar. Bevorzugt liegt der Druck in der zweiten Stufe in einem Bereich von etwa 0,5 bar bis zu 5 bar, insbesondere bei Umgebungsdruck. Durch das Vorschalten einer ersten Polymerisationsstufe in Form einer sogenannten Druckstufe lässt sich im Allgemeinen eine Verfahrensbeschleunigung erreichen, indem die geschwindigkeitsbestimmende Spaltung des Lactams, in einer speziellen Ausführung des Caprolactam, unter erhöhtem Druck erfolgt. Ansonsten wird die Polymerisation in der ersten Stufe im Allgemeinen unter ähnlichen Bedingungen wie in der zweiten Reaktionsstufe durchgeführt. Die zweite Stufe erfolgt dann vorzugsweise in einem VK-Rohr, wie zuvor beschrieben.

Aus dem Austrag aus der hydrolytischen Polymerisation in Schritt a2) werden anschließend im Schritt a3) die rohen Polyamidteilchen geformt. Dazu zählt bevorzugt eine Granulaterzeugung nach üblichen Verfahren. Dazu kann z. B. die aus dem VK-Rohr entnommene Schmelze mit einer geeigneten Fördervorrichtung einem Granulator zugeführt werden. Geeignete Fördervorrichtungen sind z. B. beheizbare Pumpen. In der Regel wird die Polymerschmelze zunächst in Strangform gepresst und die erhaltenen Stränge anschließend granuliert. Geeignete Granulatoren sind z. B. Unterwassergranulatoren.

Die in dem erfindungsgemäßen Verfahren eingesetzten Polyamidteilchen können zusätzlich übliche Additive wie Mattierungsmittel, z. B. Titandioxid, Keimbildner, z. B. Magnesumsilicat, Stabilisatoren, z. B. Kupfer(I)halogenide und Alkalihalogenide, Antioxidantien, Verstärkungsmittel, etc., in üblichen Mengen enthalten. Die Additive werden in der Regel vor, während oder nach der Polymerisation und vor dem Granulieren zugesetzt. Nach der zuvor beschriebenen speziellen Ausführungsform des Schritts a) in den Schritten a1) bis a3) werden die Additive in der Regel vor, während oder nach der Polymerisation (Schritt a2) und vor der Formgebung (Schritt a3)), z. B. durch Granulieren, zugesetzt.

### Schritt b)

Das erste Behandlungsmedium (B1) liegt beim Inkontaktbringen mit den rohen Polyamidteilchen in flüssiger Form vor.

Bevorzugt weist das erste Behandlungsmedium (B1) einen Schmelzpunkt von höchstens 150 °C, besonders bevorzugt von höchstens 100 °C, auf. So weist z. B. ε-Caprolactam einen Schmelzpunkt von 69,2 °C auf.

Als Lactam wird vorzugsweise ein Lactam eingesetzt, das auch die rohen Polyamidteilchen einpolymerisiert enthält.

Als Lactame eignen sich bevorzugt C₅- bis C₁₂-Lactame. Die Lactame sind insbesondere ausgewählt unter ε-Caprolactam, 2-Piperidon (δ-Valerolatam), 2-Pyrrolidon (γ-Butyrolactam), Capryllactam, Önanthlactam, Lauryllactam, Laurinlactam oder deren Mischungen. Bevorzugt sind Caprolactam, Lauryllactam oder deren Mischungen. Besonders bevorzugt enthält das erste Behandlungsmedium (B1) oder besteht das erste Behandlungsmedium (B1) aus Caprolactam.

In einer ersten Variante besteht das erste Behandlungsmedium (B1) ausschließlich aus wenigstens einem Lactam. Speziell besteht das erste Behandlungsmedium (B1) ausschließlich aus Caprolactam.

In einer zweiten Variante umfasst das erste Behandlungsmedium (B1) wenigstens ein Lactam und wenigstens ein davon verschiedenes Behandlungsmedium. Bevorzugt als von Lactamen verschiedenes Behandlungsmedium ist Wasser.

Wenn das erste Behandlungsmedium (B1) Wasser enthält, so beträgt der Anteil des Wassers bevorzugt 0,5 bis 50 Gew.-%, besonders bevorzugt 1 bis 25 Gew.-%, insbesondere 2 bis 20 Gew.-%, bezogen auf das Gesamtgewicht des ersten Behandlungsmediums (B1).

Das zweite Behandlungsmedium (B2) ist vorzugsweise ausgewählt unter bei den Behandlungsbedingungen inerten Gasen.

Besonders bevorzugt ist das zweite Behandlungsmedium (B2) ausgewählt unter Wasserdampf, Stickstoff, Helium, Neon, Argon, CO₂ und Mischungen davon. Insbesondere ist das zweite Behandlungsmedium (B2) ausgewählt unter Wasserdampf, Stickstoff und Mischungen davon. In einer speziellen Ausführungsform wird als zweites Behandlungsmedium Stickstoff eingesetzt.

Das Inkontaktbringen der rohen Polyamidteilchen mit dem ersten flüssigen Behandlungsmedium (B1) erfolgt in einer dafür üblichen Vorrichtung, bevorzugt einer Extraktionsvorrichtung. Derartige Extraktionsvorrichtungen zur Polyamidextraktion mit einem flüssigen Behandlungsmedium sind dem Fachmann prinzipiell bekannt.

Das Inkontaktbringen der rohen Polyamidteilchen mit dem ersten flüssigen Behandlungsmedium (B1) kann diskontinuierlich oder kontinuierlich erfolgen. Bevorzugt erfolgt das Inkontaktbringen mit dem ersten flüssigen Behandlungsmedium (B1) kontinuierlich.

Das Inkontaktbringen der rohen Polyamidteilchen mit dem ersten flüssigen Behandlungsmedium (B1) kann im Gleichstrom oder im Gegenstrom erfolgen. Bevorzugt erfolgt das Inkontaktbringen mit dem ersten flüssigen Behandlungsmedium (B1) im Gegenstrom.

In einer speziellen Ausführungsform erfolgt das Inkontaktbringen der rohen Polyamidteilchen mit dem ersten flüssigen Behandlungsmedium (B1) in Schritt b) in einer Behandlungszone, in der die Polyamidteilchen der Schwerkraft folgend nach unten bewegt werden und das flüssigen Behandlungsmedium (B1) im Gegenstrom dazu entgegen der Schwerkraft nach oben geführt wird.

Die in Schritt b) des erfindungsgemäßen Verfahrens eingesetzte Behandlungszone ist bevorzugt im Wesentlichen senkrecht angeordnet. Der Begriff im Wesentlichen senkrecht bedeutet, dass die Behandlungszone nicht exakt lotrecht zur Erdoberfläche angeordnet sein muss, sondern davon um bis zu 30°, bevorzugt um bis zu 20°, abweichen kann.

Die rohen Polyamidteilchen können der Behandlungszone mit einer üblichen Transportvorrichtung, z. B. einem Förderband, einer Förderschnecke oder über einen Transportwasserkreislauf zugeführt werden. Beim Einsatz eines Transportwasserkreislaufs können die rohen Polyamidteilchen vor dem Eintritt in die Behandlungszone über eine Abscheidevorrichtung vom Transportwasser getrennt werden.

Die rohen Polyamidteilchen werden vorzugsweise von oben in die Behandlungszone eingetragen. Sie durchströmen dann die Behandlungszone aufgrund der Schwerkraft von oben nach unten und werden im unteren Bereich der Behandlungszone ausgetragen.

Das Behandlungsmedium (B1) kann der Behandlungszone über eine Einspeisungsstelle oder über wenigstens zwei verschiedene Einspeisungsstellen zugeführt werden.

In einer ersten Variante erfolgt die Einspeisung des Behandlungsmediums (B1) ausschließlich im Bereich des Endes der Behandlungszone, an dem die Polyamidteilchen ausgetragen werden. Wird bei dieser Variante eine im Wesentlichen senkrecht angeordnete Behandlungszone eingesetzt, so erfolgt die Einspeisung des Behandlungsmediums (B1) ausschließlich im unteren Bereich der Behandlungszone.

In einer zweiten Variante erfolgt die Einspeisung eines Teilstroms des Behandlungsmediums (B1) im Bereich des Endes der Behandlungszone, an dem die Polyamidteilchen ausgetragen werden. Wird bei dieser Variante eine im Wesentlichen senkrecht angeordnete Behandlungszone eingesetzt, so erfolgt die Einspeisung eines Teilstroms des Behandlungsmediums (B1) im unteren Bereich der Behandlungszone. Ein weiterer Teilstrom des Behandlungsmediums (B1) wird der Behandlungszone über eine oder mehrere Einspeisungsstellen zugeführt, die stromaufwärts der Einspeisungsstelle des ersten Teilstroms angeordnet ist/sind.

Wird das Behandlungsmedium (B1) der Behandlungszone über wenigstens zwei verschiedene Einspeisungsstellen zugeführt, so können die eingespeisten Teilströme jeweils gleiche oder verschiedene Zusammensetzungen haben.

Bevorzugt ist der Lactamgehalt des Teilstroms des Behandlungsmediums (B1), der im Bereich des Endes der Behandlungszone eingespeist wird, an dem die Polyamidteilchen ausgetragen werden, höher als der Lactamgehalt des Teilstroms des Behandlungsmediums (B1), der der Behandlungszone über eine oder mehrere stromaufwärts der Einspeisungsstelle des ersten Teilstroms angeordnete Einspeisungsstellen zugeführt wird.

In einer besonders bevorzugten Ausführungsform des erfindungsgemäßen Verfahrens wird in die Behandlungszone im Bereich des Endes, an dem die Polyamidteilchen ausgetragen werden, ausschließlich wenigstens ein Lactam, vorzugsweise ausschließlich ε-Caprolactam, als Behandlungsmedium (B1) eingespeist.

In einer weiteren besonders bevorzugten Ausführungsform des erfindungsgemäßen Verfahrens wird in die Behandlungszone über eine oder mehrere Einspeisungsstellen, die stromaufwärts der Einspeisungsstelle des ersten Teilstroms angeordnet ist/sind als Behandlungsmedium (B1) ein Wasser/Lactam-Gemisch oder reines Wasser eingespeist.

Das Gewichtsverhältnis von Behandlungsmedium (B1) zu Polyamidteilchen liegt vorzugsweise in einem Bereich von 0,01 : 1 bis 1000 : 1, bevorzugt 0,05 : 1 bis 100 : 1, besonders bevorzugt 0,1 : 1 bis 20 : 1, insbesondere 0,4 : 1 bis 1 : 1.

Das erfindungsgemäße Verfahren ermöglicht speziell eine möglichst vollständige Integration von hydrolytischer Polymerisation und Reinigung der so erhaltenen Polyamidteilchen. Im Idealfall soll dabei die bei der Reinigung anfallende Wassermenge nicht die zum Starten der hydrolytischen Polymerisation erforderliche Wassermenge überschreiten. Ebenfalls im Idealfall soll die bei der Reinigung anfallende Menge an Monomeren und Oligomeren nicht die zur hydrolytischen Polymerisation eingesetzte Menge an Monomeren und Oligomeren überschreiten.

Vorzugsweise erfolgt das Inkontaktbringen des Behandlungsmediums (B1) mit den rohen Polyamidteilchen in Schritt b) kontinuierlich, wobei das Gewichtsverhältnis von abgetrenntem beladenen Behandlungsmedium (B1) pro Zeiteinheit zu aus der Behandlungszone ausgetragenen Polyamidteilchen pro Zeiteinheit vorzugsweise in einem Bereich von 0,01 : 1 bis 1 : 1, besonders bevorzugt 0,05 : 1 bis 0,5 : 1, insbesondere 0,1 : 1 bis 0,35 : 1, liegt. Das Gewicht des abgetrennten beladenen Behandlungsmediums (B1) pro Zeiteinheit bezieht sich dabei auf effektiv aus dem Behandlungsschritt b) ausgetragenes (ausgeschleustem) Behandlungsmedium (B1) und nicht in einem Kreislauf geführtes Behandlungsmedium (B1).

Die zuvor genannten geringen Einsatzmengen an Behandlungsmedium (B1) lassen sich beispielsweise durch entsprechende Steuerung der Strömungsgeschwindigkeiten von Behandlungsmedium (B1) und Polyamidteilchen durch die Behandlungszone erzielen. So führt eine hohe Strömungsgeschwindigkeiten der Polyamidteilchen durch die Behandlungszone bei einer gleichzeitig geringen Strömungsgeschwindigkeit des Behandlungsmediums (B1) durch die Behandlungszone zu entsprechend geringen Einsatzmengen an Behandlungsmedium (B1).

Die Strömungsgeschwindigkeit der Polyamidteilchen durch die Behandlungszone liegt vorzugsweise in einem Bereich von etwa 0,1 bis 100 m/h, besonders bevorzugt 1 bis 50 m/h, insbesondere 2 bis 25 m/h.

Das Verweilzeitverhältnis Polyamidteilchen / Behandlungsmittel liegt vorzugsweise in einem Bereich von 15 min bis 60 h, besonders bevorzugt 1 bis 30 h, insbesondere 3 bis 15 h.

Zusätzlich oder alternativ zu einer Steuerung der Strömungsgeschwindigkeiten lassen sich die zuvor genannten geringen Einsatzmengen auch durch eine Kreisfahrweise des Behandlungsmediums (B1) erzielen. In einer speziellen Ausführungsform des erfindungsgemäßen Verfahrens wird das Behandlungsmedium (B1) oder ein oder mehr als ein Teilstrom des Behandlungsmediums (B1) im Kreislauf geführt. Die in dem Teilstrom umgewälzte Menge an Behandlungsmittel (B1) wird dabei so gewählt, dass ein intensiver Stoffaustausch an der Phasengrenze der Polyamidteilchen stattfindet. Ein Teil des Behandlungsmediums (B1) wird aus dem Kreislauf kontinuierlich ausgeschleust und durch frisches Behandlungsmedium (B1) ersetzt. Bei mehreren Kreisläufen kann das beladene Behandlungsmedium (B1) aus einem stromabwärts gelegenen Kreislauf teilweise oder vollständig in einen stromaufwärts gelegenen Kreislauf eingespeist werden.

In einer speziellen Ausführungsform wird das Behandlungsmedium (B1) in wenigstens einem Kreislauf geführt, in die Behandlungszone im Bereich des Endes, an dem die Polyamidteilchen ausgetragen werden, ausschließlich wenigstens ein Lactam, vorzugsweise ausschließlich ε-Caprolactam, als Behandlungsmedium (B1) eingespeist, gegebenenfalls zusätzlich in den Kreisstrom ein Wasser/Lactam-Gemisch oder reines Wasser eingespeist und beladenes Behandlungsmedium (B1) im Bereich des Endes der Behandlungszone ausgeschleust, an dem die Polyamidteilchen eingetragen werden.

In der Regel erfolgt das Inkontaktbringen der rohen Polyamidteilchen mit dem ersten flüssigen Behandlungsmedium (B1) unter Bedingungen, bei denen die Polyamidteilchen nicht agglomerieren, aggregieren, verkleben, verklumpen, plastisch, flüssig oder gasförmig werden.

Bevorzugt erfolgt das Inkontaktbringen der rohen Polyamidteilchen mit dem ersten flüssigen Behandlungsmedium (B1) in Schritt b) bei einer Temperatur im Bereich von 50 bis 180 °C, bevorzugt 70 bis 170 °C, besonders bevorzugt 80 bis 150 °C. In einer speziellen Ausführungsform erfolgt das Inkontaktbringen der rohen Polyamidteilchen mit dem ersten flüssigen Behandlungsmedium (B1) in Schritt b) bei einer Temperatur von höchstens 150 °C.

In einer speziellen Ausführungsform weist die in Schritt b) eingesetzte Behandlungszone im Bereich des Eintrags der rohen Polyamidteilchen eine höhere Temperatur auf als im Bereich des Austrags der Polyamidteilchen. Es wurde gefunden, das beim Vorhandensein einer solchen Temperaturdifferenz Polyamidteilchen erhalten werden, die sich durch besonders niedrige Gehalte an Monomeren und/oder Oligomeren auszeichnen.

Bevorzugt liegt die Temperatur im Bereich des Eintrags der rohen Polyamidteilchen in einem Bereich von 125 bis 170 °C, besonders bevorzugt von 130 bis 160 °C. In einer speziellen Ausführungsform liegt die Temperatur im Bereich des Eintrags der rohen Polyamidteilchen bei höchstens 150 °C.

Bevorzugt liegt die Temperatur im Bereich des Austrags der rohen Polyamidteilchen in einem Bereich von 70 bis 120 °C, besonders bevorzugt von 75 bis 110 °C.

Bevorzugt beträgt die Temperaturdifferenz zwischen dem Bereich des Eintrags der rohen Polyamidteilchen und dem Bereich des Austrags der Polyamidteilchen wenigstens 5 °C, besonders bevorzugt wenigstens 10 °C, insbesondere wenigstens 20 °C, speziell wenigstens 40 °C. Bevorzugt beträgt die Temperaturdifferenz zwischen dem Bereich des Eintrags der rohen Polyamidteilchen und dem Bereich des Austrags der Polyamidteilchen höchstens 80 °C.

Die Temperaturdifferenz zwischen dem Bereich des Eintrags der rohen Polyamidteilchen und dem Bereich des Austrags der Polyamidteilchen kann kontinuierlich oder stufenförmig ausgestaltet sein.

Bevorzugt erfolgt das Inkontaktbringen der rohen Polyamidteilchen mit dem ersten flüssigen Behandlungsmedium (B1 ) bei einem Druck im Bereich von 0,01 bis 10 bar, bevorzugt 0,1 bis 7 bar, besonders bevorzugt 0,9 bis 5 bar. Insbesondere erfolgt das Inkontaktbringen bei Normaldruck (Atmosphärendruck).

Das Inkontaktbringen der rohen Polyamidteilchen mit dem ersten flüssigen Behandlungsmedium (B1) kann unter Umgebungsatmosphäre oder Inertgasatmosphäre erfolgen. Bevorzugt erfolgt das Inkontaktbringen unter Inertgasatmosphäre. Bevorzugte Inertgase sind ausgewählt unter Stickstoff, Helium, Neon, Argon, CO₂ und Mischungen davon.

Die Behandlungszeit mit dem ersten flüssigen Behandlungsmedium (B1) kann in weiten Grenzen variiert werden und beträgt in der Regel 0,1 bis 500 h, bevorzugt 0,2 bis 100 h, besonders bevorzugt 0,5 bis 50 h. Bei kontinuierlicher Verfahrensführung liegt die Gesamtverweilzeit der Polyamidteilchen in der Behandlungszone in Schritt b) bevorzugt in einem Bereich von 3 bis 50 h, besonders bevorzugt 5 bis 25 h.

Die Polyamidteilchen werden bei der kontinuierlichen Ausgestaltung des Schrittes b) beispielsweise über eine Schnecke, insbesondere eine tiefgezogene Einwellenschnecke, aus der Behandlungszone ausgetragen. Über die Drehzahl der Schnecke wird die ausgetragene Polyamidmenge und dadurch der Polyamidstand in der Behandlungszone geregelt. Die Austragsschnecke ermöglicht einen sehr gleichmäßigen, abriebfreien Polyamidaustrag. Verbrückungen der Teilchen werden ebenfalls vermieden. Da der Austrag so auch leckagefrei erfolgen kann, wird das Gegenstrom-Konzentrationsprofil in der Behandlungszone nicht gestört. Die Zugabe einer geringen Wassermenge, die durch die Schnecke hindurch der Behandlungszone wieder zugeführt werden kann, erzeugt in der Schnecke eine Flüssigkeitsströmung entgegen dem austretenden Polyamid, wodurch eine Rückvermischung und eine Benetzung der ausgetragenen mit Behandlungsmittel (B1) vermieden wird.

Im Falle einer diskontinuierlichen Ausgestaltung des erfindungsgemäßen Verfahrens kann die Abtrennung des beladenen Behandlungsmediums (B1) von den Polyamidteilchen durch Filtration, Zentrifugieren oder eine Kombination davon erfolgen. Bevorzugt erfolgt die Abtrennung des beladenen Behandlungsmediums (B1) von den Polyamidteilchen unter Bedingungen, bei denen das Behandlungsmedium (B1) flüssig ist. Dazu kann die Abtrennung bei erhöhter Temperatur erfolgen. Speziell, wenn als Behandlungsmedium (B1) ein hoch lactamhaltiges Gemisch mit Wasser eingesetzt wird oder das Behandlungsmedium (B1) ausschließlich aus wenigstens einem Lactam, z. B. Caprolactam, besteht, erfolgt die Abtrennung bei erhöhter Temperatur. Speziell erfolgt die Abtrennung des beladenen Behandlungsmediums (B1) von den Polyamidteilchen bei einer Temperatur im Bereich von 50 bis 200 °C, bevorzugt 70 bis 180 °C, besonders bevorzugt 80 bis 150 °C. Zur Abtrennung wird bevorzugt eine beheizbare Filtrationsvorrichtung eingesetzt.

Das in Schritt b) abgetrennte beladene Behandlungsmediums (B1) kann in vielen Fällen in eine Polymerisation zur Bereitstellung der rohen Polyamidteilchen in Schritt a) zurückgeführt werden. In einer bevorzugten Ausführung wird das in Schritt b) abgetrennte beladene Behandlungsmedium (B1) ohne weitere Aufarbeitung in eine Polymerisation zur Bereitstellung der rohen Polyamidteilchen in Schritt a) zurückgeführt.

Das erfindungsgemäße Verfahren ermöglicht somit speziell eine Integration von hydrolytischer Polymerisation und Reinigung der dabei erhaltenen rohen Polymerteilchen.

In einer speziellen Ausführung des erfindungsgemäßen Verfahren werden in Schritt a) rohe Polyamidteilchen aus einer hydrolytischen Polymerisation wenigstens eines Lactams bereitgestellt und überschreitet die in Schritt b) in Form des beladenen Behandlungsmediums B1) anfallende Wassermenge nicht die zum Starten der hydrolytischen Polymerisation in Schritt a) erforderliche Wassermenge.

In einer speziellen Ausführung des erfindungsgemäßen Verfahrens werden in Schritt a) rohe Polyamidteilchen aus einer hydrolytischen Polymerisation wenigstens eines Lactams bereitgestellt und überschreitet die in Schritt b) in Form des beladenen Behandlungsmediums B1) anfallende Menge an Monomeren und Oligomeren nicht die zur hydrolytischen Polymerisation in Schritt a) eingesetzte Menge an Monomeren und Oligomeren.

Das abgetrennte beladene Behandlungsmediums (B1) kann gewünschtenfalls einer Aufarbeitung unterzogen werden. Dies ist insbesondere der Fall, wenn als Behandlungsmedium (B1) ein Lactam-Wasser-Gemisch eingesetzt wird. In einer speziellen Ausführungsform wird das beladene Behandlungsmedium (B1) dann einer Auftrennung in eine an Lactam angereicherte Faktion und eine an Lactam abgereicherte Fraktion unterzogen werden. Dazu kann beispielsweise das beladene Behandlungsmedium (B1) einer destillativen Auftrennung unterzogen werden. Geeignete Trennvorrichtungen sind die dafür üblichen Destillationskolonnen und Verdampfer, wie z. B. Fallfilmverdampfer, Zwangsumlaufentspannungsverdampfer, Kurzwegverdampfer oder Dünnschichtverdampfer. Bevorzugt wird die an Lactam angereicherte Fraktion in die Polymerisation zurückgeführt. Die an Lactam abgereicherte (und entsprechend an Wasser angereicherte Fraktion) kann erneut zur Bereitstellung des flüssigen Behandlungsmediums (B1) eingesetzt oder aus dem Verfahren ausgeschleust werden.

Den in die Polymerisation zurückgeführten Fraktionen kann gewünschtenfalls frisches Lactam zugesetzt werden. Bevorzugt ist ein Zusatz von 0,01 bis 50 Gew.-% frischem Lactam, bezogen auf das Gesamtgewicht der in die Polymerisation zurückgeführten Fraktion.

Die Behandlung mit dem zweiten Behandlungsmedium (B2) kann gleichzeitig zur Behandlung mit dem ersten Behandlungsmedium (B1) oder teilweise oder vollständig nach der Behandlung mit dem ersten Behandlungsmedium (B1) erfolgen.

In einer speziellen Ausführungsform des erfindungsgemäßen Verfahrens erfolgt die Behandlung mit dem zweiten Behandlungsmedium (B2) gleichzeitig mit der Behandlung mit dem ersten Behandlungsmedium (B1). Die in Schritt b) des erfindungsgemäßen Verfahrens eingesetzte Behandlungszone ist auch in dieser Ausführungsform bevorzugt im Wesentlichen senkrecht angeordnet. Schritt b) des erfindungsgemäßen Verfahrens erfolgt auch in dieser Ausführungsform bevorzugt kontinuierlich. Die rohen Polyamidteilchen werden auch in dieser Ausführungsform vorzugsweise von oben in die Behandlungszone eingetragen. Das Behandlungsmedium (B2) kann der Behandlungszone über eine Einspeisungsstelle oder über wenigstens zwei verschiedene Einspeisungsstellen zugeführt werden. In einer speziellen Ausführung erfolgt die Einspeisung des Behandlungsmediums (B2) ausschließlich im Bereich des Endes der Behandlungszone, an dem die Polyamidteilchen ausgetragen werden. Wird bei dieser Variante eine im Wesentlichen senkrecht angeordnete Behandlungszone eingesetzt, so erfolgt die Einspeisung des Behandlungsmediums (B2) ausschließlich im unteren Bereich der Behandlungszone.

In einer weiteren speziellen Ausführungsform des erfindungsgemäßen Verfahrens erfolgt die Behandlung mit dem zweiten Behandlungsmedium (B2) vollständig nach der Behandlung mit dem ersten Behandlungsmedium (B1).

Es kann von Vorteil sein, die nach Abtrennen des Behandlungsmediums (B1) erhaltenen Polyamidteilchen vor dem Inkontaktbringen mit dem zweiten Behandlungsmedium (B2) einer Aufarbeitung zu unterziehen. Bevorzugt wird von den nach Abtrennen des Behandlungsmediums (B1) erhaltenen Polyamidteilchen anhaftendes Lactam entfernt. Bevorzugt erfolgt das Abtrennen von anhaftendem Lactam durch Zentrifugieren.

Das Inkontaktbringen der rohen Polyamidteilchen mit dem zweiten gasförmigen Behandlungsmedium (B2) erfolgt in einer Vorrichtung, die für das Arbeiten mit Feststoff-Gas-Gemischen geeignet ist. Derartige Vorrichtungen sind dem Fachmann grundsätzlich bekannt.

Bevorzugt wird zur Behandlung mit dem zweiten Behandlungsmedium (B2) eine im Wesentlichen senkrecht stehende Behandlungsvorrichtung eingesetzt. Die Behandlungsvorrichtung hat in der Regel ein Verhältnis von Länge : Durchmesser von 5 : 1 bis 30 : 1, bevorzugt von 7 : 1 bis 15 : 1.

Bevorzugt werden die Polyamidteilchen am Kopf der Behandlungsvorrichtung eingebracht.

In einer speziellen Ausführung werden vorerwärmte Polyamidteilchen in die Behandlungsvorrichtung eingebracht. Die Temperatur der Polyamidteilchen beim Eintritt in die Behandlungsvorrichtung beträgt vorzugsweise mindestens 50 °C, besonders bevorzugt mindestens 70 °C. Dazu kann die Zuführungsleitung für die Polyamidteilchen beheizt werden, oder es wird ein aus der Granulierung bereits vorerwärmtes Polyamid eingesetzt.

Die Behandlung der Polyamidteilchen mit dem zweiten gasförmigen Behandlungsmedium (B2) erfolgt vorzugsweise im Gegenstrom oder im Kreuzstrom, insbesondere im Gegenstrom. Bevorzugt wird das zweite gasförmige Behandlungsmedium (B2) von unten nach oben durch die Behandlungsvorrichtung geleitet. Die Einspeisung des Behandlungsmediums (B2) kann im Bereich des Bodens der Behandlungsvorrichtung erfolgen. Bevorzugt erfolgt die Einspeisung des Behandlungsmediums (B2) an mehreren Stellen in Fließrichtung von (B2) durch die Vorrichtung.

Die Temperatur beim Inkontaktbringen der rohen Polyamidteilchen mit dem zweiten gasförmigen Behandlungsmedium (B2) liegt vorzugsweise in einem Bereich von 70 bis 250 °C, besonders bevorzugt 90 bis 210 °C, insbesondere 100 bis 180 °C. Vorteilhaft hält man eine Temperatur von etwa 10 bis 60 °C unterhalb des Schmelzpunktes des jeweiligen Polyamids ein.

Der Druck beim Inkontaktbringen der rohen Polyamidteilchen mit dem zweiten gasförmigen Behandlungsmedium (B2) liegt vorzugsweise in einem Bereich von 0,01 bis 10 bar, bevorzugt 0,1 bis 7 bar, besonders bevorzugt 0,9 bis 5 bar.

Sofern als zweites gasförmiges Behandlungsmedium (B2) überhitzter Wasserdampf eingesetzt wird, werden die Behandlungsbedingungen so aufeinander abstimmt, dass Wasser nicht in flüssiger Phase vorliegt. Bevorzugt wird als zweites gasförmiges Behandlungsmedium (B2) jedoch kein überhitzter Wasserdampf eingesetzt. Bevorzugt wird als zweites gasförmiges Behandlungsmedium (B2) Stickstoff eingesetzt.

Die Behandlungszeit mit dem zweiten gasförmigen Behandlungsmedium (B2) kann in weiten Grenzen variiert werden und beträgt in der Regel 0,5 bis 100 h, bevorzugt 1 bis 60 h, besonders bevorzugt 2 bis 40 h.

Die Einsatzmenge an Inertgas (B2) beträgt vorzugsweise 1 bis 10 Nm³ pro kg Polyamidteilchen, bevorzugt 2 bis 6 Nm³ pro kg Polyamidteilchen.

Durch die Inertgasbehandlung werden die Polyteilchen aufgewärmt und wird der Gehalt an monomerem Lactam, soweit noch vorhanden, dessen Oligomeren sowie in der Regel auch von enthaltenem Wasser effektiv verringert.

Das beladene zweite gasförmige Behandlungsmedium (B2) wird vorzugsweise im Bereich des oberen Endes der Behandlungsvorrichtung ausgetragen.

Die kondensierten Komponenten enthalten neben monomerem Lactam noch Oligomere (soweit nicht mit dem ersten Behandlungsmedium entfernt) und in der Regel Wasser. Bevorzugt werden die kondensierten Komponenten zumindest teilweise in eine Polymerisation zur Herstellung von Polyamiden zurückgeführt.

Bevorzugt wird das zweite gasförmige Behandlungsmedium (B2) im Kreis geführt und erneut zur Behandlung der Polyamidteilchen eingesetzt. Zum Ausschleusen von Verunreinigungen kann dem Kreisgas ein Ausschleusstrom entnommen und durch frisches (B2) ersetzt werden. Es ist auch möglich, die in dem gasförmigen Austragt aus der Behandlungszone enthaltenen Lactame in einer Waschkolonne zumindest teilweise abzutrennen Geeignete Waschmedien sind z. B. die als Behandlungsmedium (B1) eingesetzten Lactame und Lactam/Wasser-Gemische.

Das erfindungsgemäße Verfahren ermöglicht, wie erwähnt, speziell eine Integration von hydrolytischer Polymerisation und Reinigung der dabei erhaltenen rohen Polymerteilchen, wobei bevorzugt auch das beladene Behandlungsmedium (B2) einbezogen wird.

In einer speziellen Ausführung des erfindungsgemäßen Verfahren werden in Schritt a) rohe Polyamidteilchen aus einer hydrolytischen Polymerisation wenigstens eines Lactams bereitgestellt und überschreitet die in Schritt b) und c) in Form der beladenen Behandlungsmedien B1) und B2) anfallende Wassermenge nicht die zum Starten der hydrolytischen Polymerisation in Schritt a) erforderliche Wassermenge.

In einer speziellen Ausführung des erfindungsgemäßen Verfahrens werden in Schritt a) rohe Polyamidteilchen aus einer hydrolytischen Polymerisation wenigstens eines Lactams bereitgestellt und überschreitet die in Schritt b) und c) in Form der beladenen Behandlungsmedien B1) und B2) anfallende Menge an Monomeren und Oligomeren nicht die zur hydrolytischen Polymerisation in Schritt a) eingesetzte Menge an Monomeren und Oligomeren.

### Nachbehandlung (Trocknung und/oder Nachpolymerisation)

Nach der Behandlung mit dem ersten flüssigen Behandlungsmedium (B1) und mit dem zweiten gasförmigen Behandlungsmedium (B2) können die Polyamidteilchen einer Nachbehandlung unterzogen werden. Dazu zählt bevorzugt eine Nachpolymerisation und/oder Trocknung der Polyamidteilchen.

Das erfindungsgemäße Verfahren ermöglicht es, dass für eine Vielzahl von Verwendungen der Polyamidteilchen auf eine Nachbehandlung verzichtet werden kann.

In einer geeigneten Ausführungsform werden die gereinigten Polymerteilchen einer zusätzlichen Trocknung und/oder Nachpolymerisation unterzogen. Als Vorrichtungen zum Nachbehandeln eignen sich beispielsweise Zentrifugen, Schachttrockner, Kreuzstromtrockner, Bandtrockner, Wirbelbetttrockner, etc. Bevorzugt liegt die Temperatur bei der Nachbehandlung in einem Bereich von 100 bis 200 °C, besonders bevorzugt 120 bis 190 °C, insbesondere 130 bis 180 °C. In einer bevorzugten Variante erfolgt die Nachbehandlung im Vakuum.

Die nach dem erfindungsgemäßen Verfahren erhältlichen Polyamidteilchen weisen vorzugsweise eine Viskositätszahl von 100 bis 400 ml/g, besonders bevorzugt von 110 bis 300 ml/g, insbesondere von 115 bis 250 ml/g. auf.

Die nach dem erfindungsgemäßen Verfahren erhältlichen Polyamidteilchen weisen vorzugsweise einen Gehalt an monomeren Komponenten von 0,001 bis 5 Gew.-%, besonders bevorzugt 0,005 bis 2,5 Gew.-%, insbesondere 0,01 bis 1 Gew.-%, speziell 0,02 bis 0,08 Gew.-%, bezogen auf das Gesamtgewicht der Polyamidteilchen, auf.

Die nach dem erfindungsgemäßen Verfahren erhältlichen Polyamidteilchen weisen vorzugsweise einen Gehalt an oligomeren Komponenten von 0,001 bis 10 Gew.-%, besonders bevorzugt 0,005 bis 5 Gew.-%, insbesondere 0,01 bis 1 Gew.-%, speziell 0,1 bis 0,5 Gew.-%, bezogen auf das Gesamtgewicht der Polyamidteilchen, auf.

Die nach dem erfindungsgemäßen Verfahren erhältlichen Polyamidteilchen weisen vorzugsweise ein zahlenmittleres Molekulargewicht Mn von 1.000 bis 500.000 g/mol, besonders bevorzugt 5.000 bis 200.000 g/mol, insbesondere 10.000 bis 50.000 g/mol, auf.

Die nach dem erfindungsgemäßen Verfahren erhältlichen Polyamidteilchen eignen sich bevorzugt zur Herstellung von Granulaten, Folien, Fasern oder Formkörpern.

Die erfindungsgemäß behandelten Polyamidteilchen eignen sich zur speziell zur Herstellung von Verpackungsfolien, Monofilamenten, Spritzgussteilen und Polyamidfasern.

Die Erfindung wird anhand der folgenden, nicht einschränkenden Beispiele näher erläutert.

### Beispiele

Die Bestimmung der Viskositätszahl erfolgt nach DIN 51562, Teil 1 mit einem Ubbelohde-Viskosimeter. Für die Bestimmung der Viskositätszahl wurden jeweils 30 g Granulat 12 h mit heißem (95 °C) vollentsalztem Wasser (Durchfluss: 10 l/h) in einem gerührtem Doppelmantelgefäß extrahiert und anschließend bei 90 °C im Vakuumtrockenschrank bei 50 mbar getrocknet. Das gereinigte Polyamidgranulat wurde zur Bestimmung der Viskositätszahl (VZ) 0,5%ig (m/V) in 96 ± 0,1 %iger Schwefelsäure gelöst. In einem Ubbelohde-Viskosimeter wurden die Durchlaufzeiten der Probelösung und des Lösungsmittels bei 25,0 ± 0,05 °C Wasserbadtemperatur bestimmt, und daraus wurde die Viskositätszahl bzw. die relative Viskosität berechnet.

Die Bestimmung der Rest-Monomeren bzw. -Oligomeren wurde direkt aus dem Granulat chromatographisch mittels HPLC durchgeführt.

### Beispiele 1 bis 2

### Reinigung eines rohen Polyamid-6-Granulats in der Flüssigphase

### (1. Reinigungsstufe)

100 g Polyamid-Granulat mit einem Vz von 135 g/ml und 89 g 100 % Caprolactam-Schuppen wurden in einem Rührkessel-Extraktor unter leichtem Rühren (mit geringer Drehzahl von ca. 50 UpM) 30 Minuten bei Raumtemperatur mit Stickstoff inertisiert (10 l/h), anschließend "M" Stunden bei einer Temperatur "T" behandelt (Werte siehe Tabelle A), das heiße Granulat mit einer auf 110 °C temperierten Fritte vom Caprolactam abgetrennt und anschließend restliches Caprolactam abzentrifugiert. Man erhielt 100 bis 103 g extrahiertes Polyamidgranulat.

Die Ergebnisse sind in Tabelle A zusammengestellt.

**Tabelle A**

| Beispiel | Extraktion | | [g/100g] Caprolactam Oligomer | | | | |
|---|---|---|---|---|---|---|---|
| | T [°C] | M [h] | Dimer | Trimer | Tetramer | Pentamer | Hexamer |
| rohes Polyamid | - | - | 1,251 | 0,803 | 0,652 | 0,519 | 0,289 |
| 1 | 140 | 16 | 0,205 | 0,116 | 0,118 | 0,147 | 0,125 |
| 2 | 150 | 5 | 0,205 | 0,136 | 0,130 | 0,134 | 0,094 |

### Beispiel 3

### 3.1) Extraktion mit Caprolactam

120 g rohes Polyamid-Granulat mit einer VZ von 110 g/ml und 1200 g 100%ige Caprolactam-Schuppen wurden unter leichtem Rühren (mit geringer Drehzahl von ca. 50 UpM) 30 Minuten bei Raumtemperatur mit Stickstoff inertisiert (10 l/h), anschließend 16 Stunden bei einer Temperatur von 95 °C behandelt, das heiße Granulat mit einer auf 110 °C temperierten Fritte vom Caprolactam abgetrennt und anschließend restliches Caprolactam abzentrifugiert. Man erhielt 122 g von Oligomeren extrahiertes Polyamidgranulat. Die Ergebnisse sind in Tabelle B wiedergegeben.

### 3.2) Behandlung mit Stickstoff

80 g von dem extrahierten Produkt aus Beispiel 3.1) wurden in einem Extraktor, bestehend aus einem Doppelmantelrohr mit Frittenboden, von unten mit 300 l/h bei 180 °C bei Normaldruck (1013 mbar) 48 h mit Stickstoff durchströmt und das Gas durch eine Kühlfalle geleitet um die darin gelösten kondensierbaren Komponenten auszukondensieren. Anschließend wurde das Polyamid-Granulat mit kaltem Stickstoff abgekühlt und aus dem Extraktor entnommen. Die Ergebnisse sind in Tabelle B zusammengestellt.

**Tabelle B**

| | gesamt Extraktgehalt [%] | davon Monomer [%] | VZ [ml/g] |
|---|---|---|---|
| rohes Polyamid | 13,12 | 9,44 | 135 |
| nach Extraktion | 14,36 | 14,27 | 135 |
| nach N₂-Behandlung | 0,57 | 0,060 | 242 |

## Patentansprüche

1. Verfahren zur Herstellung von Polyamidteilchen, bei dem man
a) rohe Polyamidteilchen bereitstellt,
b) die in Schritt a) bereitgestellten rohen Polyamidteilchen in einer Behandlungszone mit einem ersten flüssigen Behandlungsmedium (B1) in Kontakt bringt, dass wenigstens ein Lactam enthält, und das beladene Behandlungsmedium (B1) abtrennt,
c) gegebenenfalls die rohen Polyamidteilchen zusätzlich mit einem zweiten gasförmigen Behandlungsmedium (B2) in Kontakt bringt.

2. Verfahren nach Anspruch 1, wobei man die rohen Polyamidteilchen in Schritt c) mit zusätzlich Stickstoff als Behandlungsmedium (B2) in Kontakt bringt.

3. Verfahren nach einem der Ansprüche 1 oder 2, bei dem man zur Bereitstellung der rohen Polyamidteilchen in Schritt a)
a1) ein Monomergemisch bereitstellt, das wenigstens ein Lactam und/oder ein Oligomer davon enthält,
a2) das in Schritt a1) bereitgestellte Monomergemisch in einer hydrolytischen Polymerisation in Gegenwart von Wasser unter Erhalt eines Reaktionsgemischs umsetzt, das Polyamid, Wasser, nicht umgesetzte Monomere und Oligomere enthält, und
a3) aus dem in Schritt a2) erhaltenen Reaktionsgemisch rohe Polyamidteilchen formt.

4. Verfahren nach einem der vorhergehenden Ansprüche, wobei die in Schritt b) eingesetzte Behandlungszone im Wesentlichen senkrecht angeordnet ist und die rohen Polyamidteilchen im Gegenstrom mit dem ersten flüssigen Behandlungsmedium (B1) und der Schwerkraft folgend nach unten durch die Behandlungszone geführt werden und das flüssige Behandlungsmedium (B1) entgegen der Schwerkraft nach oben geführt wird.

5. Verfahren nach einem der vorhergehenden Ansprüche, wobei das Behandlungsmedium (B1) zumindest teilweise oder ausschließlich im Bereich des Endes der Behandlungszone eingespeist wird, an dem die Polyamidteilchen ausgetragen werden.

6. Verfahren nach einem der vorhergehenden Ansprüche, wobei ein Teilstrom des Behandlungsmediums (B1) im Bereich des Endes der Behandlungszone eingespeist wird, an dem die Polyamidteilchen ausgetragen werden und ein weiterer Teilstrom des Behandlungsmediums (B1) der Behandlungszone über eine oder mehrere Einspeisungsstellen zugeführt wird, die stromaufwärts der Einspeisungsstelle des ersten Teilstroms angeordnet ist/sind.

7. Verfahren nach Anspruch 6, wobei der Lactamgehalt des Teilstroms des Behandlungsmediums (B1), der im Bereich des Endes der Behandlungszone eingespeist wird, an dem die Polyamidteilchen ausgetragen werden, höher ist als der Lactamgehalt des Teilstroms des Behandlungsmediums (B1), der der Behandlungszone über eine oder mehrere stromaufwärts der Einspeisungsstelle des ersten Teilstroms angeordnete Einspeisungsstelle(n) zugeführt wird.

8. Verfahren nach einem der Ansprüche 5 bis 7, wobei in die Behandlungszone im Bereich des Endes, an dem die Polyamidteilchen ausgetragen werden, ausschließlich wenigstens ein Lactam, vorzugsweise ausschließlich ε-Caprolactam, als Behandlungsmedium (B1) eingespeist wird.

9. Verfahren nach einem der Ansprüche 6 bis 8, wobei in die Behandlungszone über eine oder mehrere Einspeisungsstelle(n), die stromaufwärts der Einspeisungsstelle des ersten Teilstroms angeordnet ist/sind als zweiter Teilstrom des Behandlungsmediums (B1) ein Wasser/Lactam-Gemisch oder reines Wasser eingespeist wird.

10. Verfahren nach einem der vorhergehenden Ansprüche, wobei das Inkontaktbringen des Behandlungsmediums (B1) mit den rohen Polyamidteilchen in Schritt b) kontinuierlich erfolgt, wobei das Gewichtsverhältnis von abgetrenntem beladenen Behandlungsmedium (B1) pro Zeiteinheit zu aus der Behandlungszone ausgetragenen Polyamidteilchen pro Zeiteinheit vorzugsweise in einem Bereich von 0,01 : 1 bis 1: 1, besonders bevorzugt 0,05 : 1 bis 0,5 : 1, insbesondere 0,1 : 1 bis 0,35 : 1, liegt.

11. Verfahren nach einem der vorhergehenden Ansprüche, wobei das Behandlungsmedium (B1) oder ein Teilstrom oder mehr als ein Teilstrom des Behandlungsmediums (B1) im Kreislauf geführt wird.

12. Verfahren nach einem der vorhergehenden Ansprüche, wobei die in Schritt b) eingesetzte Behandlungszone im Bereich des Eintrags der rohen Polyamidteilchen eine höhere Temperatur aufweist als im Bereich des Austrags der Polyamidteilchen.

13. Verfahren nach einem der vorhergehenden Ansprüche, wobei das in Schritt b) abgetrennte beladene Behandlungsmedium (B1) in eine Polymerisation zur Bereitstellung der rohen Polyamidteilchen in Schritt a) zurückgeführt wird.

14. Verfahren nach einem der Ansprüche 3 bis 13, wobei in Schritt a) rohe Polyamidteilchen aus einer hydrolytischen Polymerisation wenigstens eines Lactams bereitgestellt werden und die in Schritt b) in Form des beladenen Behandlungsmediums B1) anfallende Wassermenge nicht die zum Starten der hydrolytischen Polymerisation in Schritt a) erforderliche Wassermenge überschreitet.

15. Verfahren nach einem der Ansprüche 3 bis 14, wobei in Schritt a) rohe Polyamidteilchen aus einer hydrolytischen Polymerisation wenigstens eines Lactams bereitgestellt werden und die in Schritt b) in Form des beladenen Behandlungsmediums B1) anfallende Menge an Monomeren und Oligomeren nicht die zur hydrolytischen Polymerisation in Schritt a) eingesetzte Menge an Monomeren und Oligomeren überschreitet.

16. Verfahren nach einem der vorhergehenden Ansprüche, bei dem man das beladene Behandlungsmedium (B2) einer Abtrennung wenigstens eines Teils der darin gelösten Komponenten durch Kondensation unterzieht und die aus dem beladenen Behandlungsmedium (B2) kondensierten Komponenten zumindest teilweise in eine Polymerisation zur Bereitstellung der rohen Polyamidteilchen in Schritt a) zurückgeführt werden.

17. Verfahren nach einem der Ansprüche 2 bis 16, wobei in Schritt a) rohe Polyamidteilchen aus einer hydrolytischen Polymerisation wenigstens eines Lactams bereitgestellt werden und die in Schritt b) und c) in Form der beladenen Behandlungsmedien B1) und B2) anfallende Wassermenge nicht die zum Starten der hydrolytischen Polymerisation in Schritt a) erforderliche Wassermenge überschreitet.

18. Verfahren nach einem der Ansprüche 2 bis 17, wobei in Schritt a) rohe Polyamidteilchen aus einer hydrolytischen Polymerisation wenigstens eines Lactams bereitgestellt werden und die in Schritt b) und c) in Form der beladenen Behandlungsmedien B1) und B2) anfallende Menge an Monomeren und Oligomeren nicht die zur hydrolytischen Polymerisation in Schritt a) eingesetzte Menge an Monomeren und Oligomeren überschreitet.

19. Verwendung von gereinigten Polyamidteilchen, erhältlich durch ein Verfahren, wie in einem der Ansprüche 1 bis 18 definiert, zur Herstellung von Granulaten, Folien, Fasern oder Formkörpern.
